# EUROPEAN PATENT SPECIFICATION

(11) **EP 4 140 025 B1**
(45) Date of publication and mention of the grant of the patent: **30.07.2025**
(21) Application number: 20939037.6
(22) Date of filing: 05.06.2020
(51) Int. Cl.: H02M 1/15, H05B 45/34, H05B 45/3725, H05B 45/59

(54) **VOLTAGE REGULATING CIRCUIT, CONTROLLING METHOD AND DRIVING EQUIPMENT**
SPANNUNGSREGELUNGSSCHALTUNG, STEUERUNGSVERFAHREN UND ANTRIEBSVORRICHTUNG
CIRCUIT DE RÉGULATION DE TENSION, PROCÉDÉ DE COMMANDE ET ÉQUIPEMENT D'ACTIVATION

(43) Date of publication of application: 01.03.2023
(73) Proprietor: Tridonic GmbH & Co KG, 6851 Dornbirn (AT)
(72) Inventor: CHEN, Zhiwen, Shenzhen, Guangdong 518131 (CN); MAO, Qiuxiang, Shenzhen, Guangdong 518131 (CN)
(74) Representative: Rupp, Christian
(86) International application number: PCT/CN2020/094727
(87) International publication number: WO 2021/243713

(56) References cited:
- CN-A- 101 384 127
- CN-A- 103 582 217
- CN-A- 105 163 472
- CN-A- 106 061 067
- CN-A- 106 163 003
- CN-A- 110 876 214
- US-A1- 2014 152 192
- US-A1- 2014 177 304
- US-A1- 2014 265 844
- US-A1- 2016 262 226

## Description

### Technical Field

Embodiments of the present disclosure generally relate to the field of electrical circuit, and more particularly, to a voltage regulating circuit, a controlling method and a driving equipment.

### Background

This section introduces aspects that may facilitate better understanding of the present disclosure. Accordingly, the statements of this section are to be read in this light and are not to be understood as admissions about what is in the prior art or what is not in the prior art.

In the field of lighting technology, it is often needed to configure a driving current, which is used to drive a lighting device. The lighting device is LED (Light Emitting Diode) for example.

The lighting device is driven by a driver, which outputs direct current to the lighting device. For most of low cost drivers, output current has high ripple coefficient, e.g. ±30% or even higher. High ripple coefficient may make the lighting device to flicker. One transistor can be used as voltage regulator to cut ripple.

In many applications of constant voltage (CV) circuits, pulse width modulation (PWM) dimming is needed. One transistor is used as a voltage switch to switch output voltage on or off. US 2016 / 262226 A1 discloses a dimmable voltage regulating circuit combining DC/PWM dimming and linear dimming methods.

### Summary

This invention is defined by a voltage regulating circuit according to claim 1 and by a controlling method according to claim 8. Further embodiments are set out in the dependent claims.

Inventor of this disclosure found: in a circuit with functions of ripple suppression and PWM dimming, two transistors are needed, one is for ripple suppression, and the other one is for output voltage switching of PWM dimming. Two transistors will bring a higher cost.

In general, embodiments of the present disclosure provide a voltage regulating circuit, a controlling method and a driving equipment. In the embodiments, one transistor is used for both purpose of ripple suppression and output voltage switching of PWM dimming. Therefore, lower cost is obtained, and less space is need in the voltage regulating circuit.

In a first aspect, there is provided a voltage regulating circuit, including:
a first input port X1-a and a second input port X1-b, configured to receive an input voltage;
a first output port X2-a and a second output port X2-b, configured to output an output voltage, the first input port connects with the first output port;
an output circuit 100, configured to be connected between the first output port and the second output port;
a voltage regulator 200, configured to be connected between the first output port and the second output port, setting the output voltage to a predetermined value according to a reference voltage U1;
a voltage detector 300, 300a, configured to be connected with the first output port and the voltage regulator 200, a first transistor Q3, configured to be connected between the second output port and the second input port, a controlling terminal of the first transistor Q3 being coupled to the first output port and the voltage detector;
when the output voltage being higher than the predetermined value, the voltage detector 300 turning off the first transistor Q3; and
a second transistor Q2, configured to be coupled between the controlling terminal of the first transistor Q3 and the second input port, a controlling terminal of the second transistor Q2 receiving a dimming signal, when voltage of the dimming signal being higher than a threshold, the second transistor Q2 being configured to turn off the first transistor Q3.

In another embodiment, the voltage regulator 200 includes:
a first resistor R3 and a second resistor R7, configured to be in series connection between the first output port and the second output port; and
a reference voltage generator, an anode of the reference voltage generator is connected to the second output port, a cathode of the reference voltage generator is connected to the voltage detector 300, a reference terminal of the reference voltage generator is connected to a connecting node of the first resistor R3 and the second resistor R7, the cathode of the reference voltage generator output the reference voltage.

In another embodiment, the voltage regulator 200 further comprises:
a first capacitor C2 and a third resistor R11, configured to be in series connection between the cathode and the reference terminal of the reference voltage generator.

In another embodiment, a fourth resistor R10 and a fifth resistor R12 are in serials connection between the first output port and the controlling port of the first transistor Q3,
a sixth resistor R9 is connected between the controlling port of the first transistor Q3 and the second input port.

In another embodiment, the voltage detector 300 includes:
a seventh resistor R1, an eighth resistor R2 and a diode D6, configured to be in serials connection between the first input port and the voltage regulator 200; and
an optical coupler U3, an anode of an input LED in the optical coupler U3 is connected to a node connecting the seventh resistor R1 and the eighth resistor R2, a cathode of the input LED in the optical coupler U3 is connected to a node connecting the eighth resistor R2 and the diode D6, a collector of an output transistor in the optical coupler U3 is connected to a collector of the second transistor Q2, and an emitter of the output transistor in the optical coupler U3 is connected to the second input port.

In another embodiment, the voltage detector 300a includes:
a seventh resistor R1, an eighth resistor R2 and a diode D6, configured to be in serials connection between the first input port and the voltage regulator 200; and
a third transistor Q1, an emitter of the third transistor Q1 is coupled to the first input port via a ninth resistor R14, a collector of the third transistor Q1 is coupled to a base of the second transistor Q2, a base of the third transistor Q1 is connected to the eighth resistor R2.

In a second aspect, there is provided a controlling method of a ripple suppression circuit, includes: when voltage of the dimming signal being higher than a threshold, the second transistor Q2 turning off the first transistor.

In a third aspect, there is provided a driving equipment, includes a driving circuit and the voltage regulator circuit according to the first aspect of the disclosure, the input voltage is provided by the driving circuit.

According to various embodiments of the present disclosure, one transistor is used for both purpose of ripple suppression and output voltage switching of PWM dimming. Therefore, lower cost is obtained, and less space is need in the voltage regulating circuit.

### Brief Description of the Drawings

The above and other aspects, features, and benefits of various embodiments of the disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
Fig. 1 is a diagram of a voltage regulating circuit in accordance with an embodiment of the present disclosure;
Fig. 2 is a diagram of a voltage regulating circuit according to another embodiment of the disclosure;
Fig. 3 is a diagram of a driving equipment;
Fig. 4 shows a flowchart of a controlling method 400 of the voltage regulating circuit.

### Detailed Description

The present disclosure will now be discussed with reference to several example embodiments. It should be understood that these embodiments are discussed only for the purpose of enabling those skilled persons in the art to better understand and thus implement the present disclosure, rather than suggesting any limitations on the scope of the present disclosure.

As used herein, the terms "first" and "second" refer to different elements. The singular forms "a" and "an" are intended to include the plural forms as well, unless the context clearly indicates otherwise. The terms "comprises," "comprising," "has," "having," "includes" and/or "including" as used herein, specify the presence of stated features, elements, and/or components and the like, but do not preclude the presence or addition of one or more other features, elements, components and/or combinations thereof. The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

### First aspect of embodiments

A voltage regulating circuit is provided in a first embodiment.

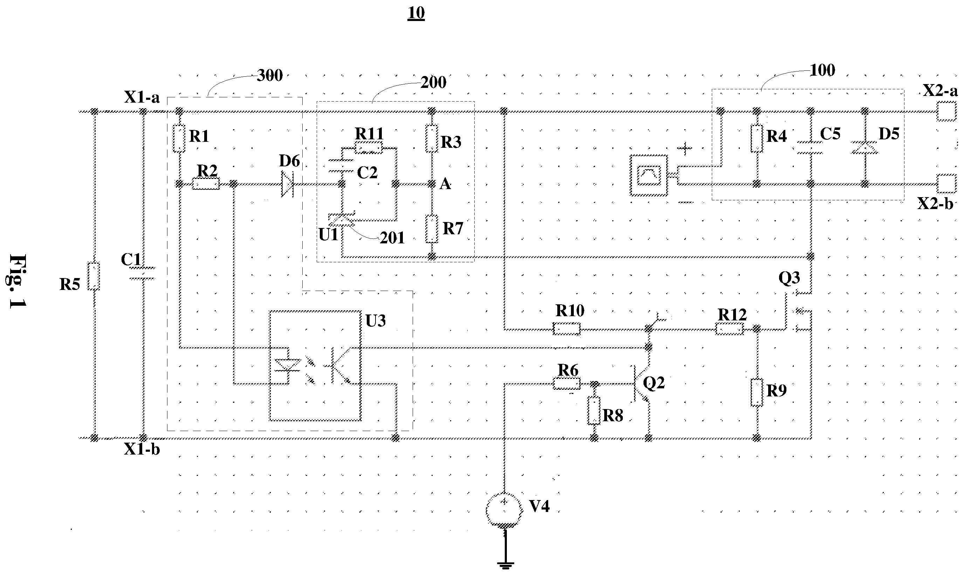

Fig. 1 is a diagram of a voltage regulating circuit in accordance with an embodiment of the present disclosure. As shown in Fig. 1, a voltage regulating circuit 10 includes a first input port X1-a, a second input port X1-b, a first output port X2-a, a second output port X2-b, an output circuit 100, a voltage regulator 200, a first transistor Q3, a voltage detector 300, and a second transistor Q2.

In the embodiment, the first input port X1-a and the second input port X1-b are configured to receive an input voltage. The input voltage may be direct current/voltage which has ripples. The input voltage may be provided by a driving circuit, for example, the driving circuit is single stage constant voltage (CV) circuit.

The first output port X2-a and the second output port X2-b are configured to output an output voltage. The first input port X1-a is connected with the first output port X2-a, thus the first input port X1-a and the first output port X2-a may have the same voltage.

The output circuit 100 is configured to be connected between the first output port X2-a and the second output port X2-b. The output circuit 100 includes a resistor R4, a capacitor C5 and a diode D5. The resistor R4, the capacitor C5 and the diode D5 are in parallel connection between the first output port X2-a and the second output port X2-b. An anode of the diode D5 is connected to the second output port X2-b, a cathode of the diode D5 is connected to the first output port X2-a.

The voltage regulator 200 is configured to be connected between the first output port X2-a and the second output port X2-b, setting the output voltage to a predetermined value according to a reference voltage U1.

For example, as shown in Fig. 1, the voltage regulator 200 includes: a first resistor R3, a second resistor R7 and a reference voltage generator 201.

The first resistor R3 and the second resistor R7 are configured to be in series connection between the first output port X2-a and the second output port X2-b.

The reference voltage generator 201 generates the reference voltage U1. An anode of the reference voltage generator 201 is connected to the second output port X2-b, a cathode of the reference voltage generator 201 is connected to the voltage detector 300, a reference terminal of the voltage generator 201 is connected to a connecting node A of the first resistor R3 and the second resistor R7, the cathode of the reference voltage generator 201 outputs the reference voltage U1. The resistance of R3 and R7 is tuned, the reference voltage U1 may change. The output voltage that is outputted from the first output port X2-a and the second output port X 2-b will be set to the predetermined value, for example, the predetermined value is 24V. As the reference voltage U1 changes, the predetermined value changes.

As shown in Fig. 1, the voltage regulator 200 further includes: a first capacitor C2 and a third resistor R11. The capacitor C2 and the resistor R11 is configured to be in series connection between the cathode and the reference terminal of the reference voltage generator 201. The capacitor C2 is used for filtering out ripples in the output voltage.

As shown in Fig. 1, the first transistor Q3 is configured to be connected between the second output port X2-b and the second input port X1-b. A controlling terminal of the first transistor Q3 is coupled to the first output port X2-a, for example, a resistor R10 and a resistor R12 are in serials connection between the first output port X2-a and the controlling port of the first transistor Q3. A resistor R9 is connected between the controlling port of the first transistor Q3 and the second input port X1-b.

As shown in FIG 1, the first transistor Q3 is a MOS FET (Metal-Oxide-Semiconductor Field-Effect Transistor). The controlling terminal of the first transistor Q3 is a gate. A drain of the first transistor Q3 is connected to the second output port X2-b. A source of the first transistor Q3 is connected to the second input port X1-b.The embodiment will not be limited thereto; the first transistor Q3 can be of other type, for example a bipolar transistor, such as an NPN bipolar transistor.

The voltage detector 300 is configured to be connected with the first output port X2-a and the voltage regulator 200.When the output voltage is detected to be higher than the predetermined value, the voltage detector 300 pulls down the driving voltage of the first transistor Q3. The pulled down driving voltage of Q3 will increase Ron (on-resistance) of Q3, then voltage drop on the first transistor Q3 is increased, thus ripple of output voltage is suppressed. Therefore, the first transistor Q3 can work as a ripple suppressor.

The second transistor Q2 is configured to be coupled between the controlling terminal of the first transistor Q3 and the second input port X1-b. A controlling terminal of the second transistor Q2 receives a dimming signal. The dimming signal is provided by an external PWM dimming signal generator V4. A resistor R6 is connected between the controlling terminal of the second transistor Q2 and the external PWM dimming signal generator V4. A resistor R8 is connected between the controlling terminal of the second transistor Q2 and the second input port X1-b.

As shown in Fig. 1, the second transistor Q2 is NPN bipolar transistor, and the controlling terminal of the second transistor Q2 is a base of the NPN bipolar transistor. The embodiment will not be limited thereto; the second transistor Q2 can be of other type, for example a MOS FET.

When the dimming signal is low or the external PWM dimming signal generator V4 is not connected with the controlling terminal of the transistor Q2, voltage drop on R8 is not able to turn on the second transistor Q2, driving voltage of the first transistor Q3 is not pulled down, and the first transistor Q3 works in a linear region for ripple suppression. The output voltage is outputted from the first output port X2-a and the second output port X2-b. When the dimming signal is high , voltage drop on R8 is able to turn on the second transistor Q2, driving voltage of the first transistor Q3 is pulled down, and the first transistor Q3 is turned off, there is no output voltage being outputted from the first output port X2-a and the second output port X2-b. Therefore, the first transistor Q3 can work as an output voltage switching of PWM dimming.

According to the embodiments of the present disclosure, the first transistor Q3 is used for two purposes: one is ripple suppression, and the other one is output voltage switching of PWM dimming. Therefore, one transistor can be omitted, lower cost is obtained, and less space is need in the voltage regulating circuit.

As shown in Fig. 1, in at least one embodiment, the voltage detector 300 includes: a resistor R1, a resistor R2, a diode D6 and an optical coupler U3.

The resistor R1, the resistor R2 and the diode D6 are configured to be in serials connection between the first input port X1-a and the voltage regulator 200. For example, an anode of the diode D6 is connected to the resistor R2, a cathode of the diode D6 is connected to the cathode of the reference voltage generator 201.

The optical coupler U3 includes an input LED and an output transistor. An anode of the input LED in the optical coupler U3 is connected to a node connecting the resistor R1 and the resistor R2, a cathode of the input LED is connected to a node connecting the resistor R2 and the diode D6. A collector of the output transistor in the optical coupler U3 is connected to the collector of the second transistor Q2, and the emitter of the output transistor in the optical coupler U3 is connected to the second input port X1-b.

As shown in Fig. 1, when the output voltage is higher than the predetermined value as ripple peak, voltage of the cathode of the reference voltage generator 201 pulls the input LED in U3 to conduct, and output transistor pulls down driving voltage of Q3, then voltage drop on Q3 is increased, so the excessive voltage is on Q3 to keep the output voltage to the predetermined value and ripple peak is cut.

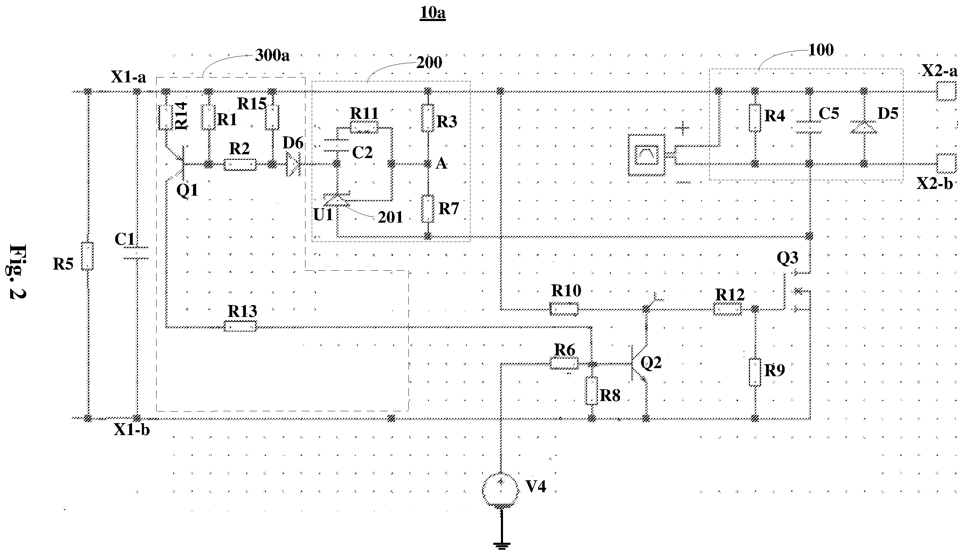

Fig. 2 is a diagram of a voltage regulating circuit according to another embodiment of the disclosure. A voltage detector 300a in Fig. 2 is different from the voltage detector 300 in Fig. 1. Descriptions for the same element with the same labels in Fig. 1 and Fig. 2 are omitted.

As shown in Fig. 2, a voltage regulating circuit 10a includes the voltage detector 300a. The voltage detector 300a includes: a resistor R1, a resistor R2, a diode D6 and a third transistor Q1.

As shown in Fig. 2, the resistor R1, the resistor R2 and the diode D6 are configured to be in serials connection between the first input port X1-a and the voltage regulator 200. For example, an anode of the diode D6 is connected to the resistor R2, a cathode of the diode D6 is connected to the cathode of the reference voltage generator 201.

An emitter of the third transistor Q1 is coupled to the first input port X1-a via a resistor R14, a collector of the third transistor Q1 is coupled to a base of the second transistor Q2 via a resistor R13, a base of the third transistor Q1 is connected to a connecting node between the resistor R1 and the resistor R2.

The third transistor Q1 is a PNP bipolar transistor. The embodiment will not be limited thereto; the third transistor Q3 can be of other type, for example a MOS FET.

As shown in Fig. 2, when the output voltage is higher than the predetermined value as ripple peak, voltage of the cathode of the reference voltage generator 201 pulls the third transistor Q1 to conduct, and pulls up the second transistor Q2 to conduct. Then, the driving voltage of Q3 is pulled down, voltage drop on Q3 is increased, so the excessive voltage is on Q3 to keep the output voltage to the predetermined value and ripple peak is cut.

Besides, as shown in Fig. 1 and Fig. 2, the voltage regulating circuit 10 and 10a may further include a resistor R5 and a capacitor C1.

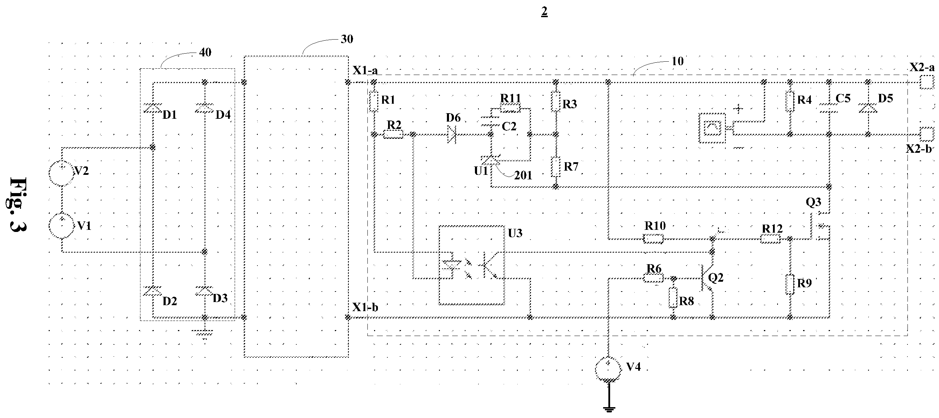

Fig. 3 is a diagram of a driving equipment. As shown in Fig. 3, a driving equipment 3 includes the voltage regulating circuit 10 and a driving circuit 30.

The driving equipment 3 further includes a rectifier 40, which includes a diode D1, a diode D, a diode D3 and a diode D1. The rectifier 40 rectifies a voltage provided by a power source V1 and a power source V2. V1 provides DC voltage, V2 provides a sine signal added on the DC voltage.

The driving circuit 30 is a constant voltage circuit, for example, a single stage constant voltage circuit, which provides the input voltage to the voltage regulating circuit 10.

In another embodiment, the driving equipment 3 in Fig. 3 can be replace by the voltage detector 300a in Fig. 2.

The driving circuit 30 may be formed by a flyback converter or resonant halfbridge converter or LLC converter including a transformer. Instead of the transformer there might from an inductor a part of a switched converter e.g. a buck converter or boost converter which forms the driving circuit. The clocking of the driving circuit and especially the transformer by at least one controllable switch which is clocked at high frequency may depend on a controlling signal inputted to a control input of the driving circuit. For instance the frequency and / or the duty cycle of the controllable switch of the driving circuit may be adjusted in dependency on the controlling signal inputted to an input of the driving circuit.

The driving circuit may generate a driving current or driving voltage for the lighting device. The driving circuit may output the driving current or driving voltage for the lighting device at the first input port X1-a and the second input port X1-b in order to output the input voltage to the voltage regulating circuit 10 (or 10a).

### Second aspect of embodiments

A controlling method of a voltage regulating circuit. The voltage regulating circuit of the first aspect of embodiments is provided in an embodiment. The same contents as those in the first aspect of embodiments are omitted.

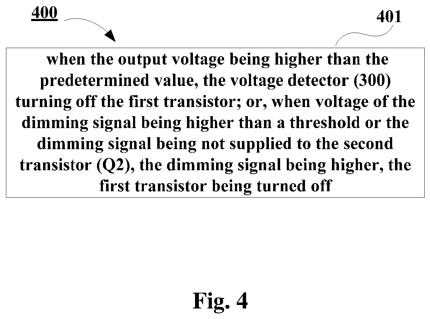

Fig. 4 shows a flowchart of a controlling method 400 of the voltage regulating circuit.

As shown in Fig. 4, the method 400 includes:

Block 401: when the output voltage being higher than the predetermined value, the voltage detector (300) turning off the first transistor; or, when voltage of the dimming signal being higher than a threshold, the second transistor (Q2) turning off the first transistor (Q3).

As can be seen from the above mentioned embodiments, the first transistor Q3 is used for two purposes: one is ripple suppression, and the other one is output voltage switching of PWM dimming. Therefore, one transistor can be omitted, lower cost is obtained, and less space is need in the voltage regulating circuit.

### Third aspect of embodiments

A driving equipment is provided in an embodiment. The driving equipment includes a driving circuit and the voltage regulating circuit according to the first aspect of embodiments.

**In** the embodiment, the voltage regulating circuit receives the input voltage provided by the driving circuit, and outputs signal with low ripple coefficient. The signal with low ripple coefficient may be provided to a lighting device, so that flicker of the lighting device can be reduced.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments.

Although the present disclosure has been described in language specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A voltage regulating circuit, comprising:
a first input port (X1-a) and a second input port (X1-b), configured to receive an input voltage;
a first output port (X2-a) and a second output port (X2-b), configured to output an output voltage, the first input port connects with the first output port;
an output circuit (100), configured to be connected between the first output port and the second output port;
a voltage regulator (200), configured to be connected between the first output port and the second output port, setting the output voltage to a predetermined value according to a reference voltage (U1);
a voltage detector (300, 300a), configured to be connected with the first output port and the voltage regulator (200),
a first transistor (Q3), configured to be connected between the second output port and the second input port, a controlling terminal of the first transistor (Q3) being coupled to the first output port and the voltage detector (300, 300a);
when the output voltage being higher than the predetermined value, the voltage detector (300) being configured to turn off the first transistor (Q3); and
a second transistor (Q2), configured to be coupled between the controlling terminal of the first transistor (Q3) and the second input port, a controlling terminal of the second transistor (Q2) receiving a dimming signal, when voltage of the dimming signal being higher than a threshold, the second transistor (Q2) being configured to turn off the first transistor (Q3).

2. The voltage regulating circuit according to claim 1, wherein,
the voltage regulator (200) comprises:
a first resistor (R3) and a second resistor (R7), configured to be in series connection between the first output port and the second output port; and
a reference voltage generator, an anode of the reference voltage generator is connected to the second output port, a cathode of the reference voltage generator is connected to the voltage detector (300), a reference terminal of the reference voltage generator is connected to a connecting node of the first resistor (R3) and the second resistor (R7), the cathode of the reference voltage generator output the reference voltage.

3. The voltage regulating circuit according to claim 2, wherein,
the voltage regulator (200) further comprises:
a first capacitor (C2) and a third resistor (R11), configured to be in series connection between the cathode and the reference terminal of the reference voltage generator.

4. The voltage regulating circuit according to claim 1, wherein,
a fourth resistor (R10) and a fifth resistor (R12) are in serials connection between the first output port and the controlling port of the first transistor (Q3),
a sixth resistor (R9) is connected between the controlling port of the first transistor (Q3) and the second input port.

5. The voltage regulating circuit according to claim 1, wherein,
the voltage detector (300) comprises:
a seventh resistor (R1), an eighth resistor (R2) and a diode (D6), configured to be in serials connection between the first input port and the voltage regulator (200); and
an optical coupler (U3), an anode of an input LED in the optical coupler (U3) is connected to a node connecting the seventh resistor (R1) and the eighth resistor (R2), a cathode of the input LED in the optical coupler (U3) is connected to a node connecting the eighth resistor (R2) and the diode (D6), a collector of an output transistor in the optical coupler (U3) is connected to a collector of the second transistor (Q2), and an emitter of the output transistor in the optical coupler (U3) is connected to the second input port.

6. The voltage regulating circuit according to claim 1, wherein,
the voltage detector (300a) comprises:
a seventh resistor (R1), an eighth resistor (R2) and a diode (D6), configured to be in serials connection between the first input port and the voltage regulator (200); and
a third transistor (Q1), an emitter of the third transistor (Q1) is coupled to the first input port via a ninth resistor (R14), a collector of the third transistor (Q1) is coupled to a base of the second transistor (Q2), a base of the third transistor (Q1) is connected to the eighth resistor (R2).

7. A driving equipment, comprising a driving circuit, and the voltage regulating circuit according to one of claims 1-6, wherein:
the input voltage is provided by the driving circuit.

8. A controlling method of a voltage regulating circuit, the voltage regulating circuit comprising:
a first input port (X1-a) and a second input port (X1-b), configured to receive an input voltage;
a first output port (X2-a) and a second output port (X2-b), configured to output an output voltage, the first input port connects with the first output port;
an output circuit (100), configured to be connected between the first output port and the second output port;
a voltage regulator (200), configured to be connected between the first output port and the second output port, setting the output voltage to a predetermined value according to a reference voltage (U1);
a voltage detector (300, 300a), configured to be connected with the first output port and the voltage regulator (200);
a first transistor (Q3), configured to be connected between the second output port and the second input port, a controlling terminal of the first transistor (Q3) being coupled to the first output port and the voltage detector (300, 300a); and
a second transistor (Q2), configured to be coupled between the controlling terminal of the first transistor (Q3) and the second output port, a controlling terminal of the second transistor (Q2) receiving a dimming signal,
the controlling method comprising:
when the output voltage being higher than the predetermined value, the voltage detector (300) turning off the first transistor (Q3); or
when voltage of the dimming signal being higher than a threshold, the second transistor (Q2) turning off the first transistor (Q3).

## Patentansprüche

1. Spannungsregelschaltung, umfassend:
einen ersten Eingangsanschluss (X1-a) und einen zweiten Eingangsanschluss (X1-b), die konfiguriert sind, um eine Eingangsspannung zu empfangen;
einen ersten Ausgangsanschluss (X2-a) und einen zweiten Ausgangsanschluss (X2-b), die konfiguriert sind, um eine Ausgangsspannung auszugeben, wobei der erste Eingangsanschluss mit dem ersten Ausgangsanschluss verbunden ist;
eine erste Ausgangsschaltung (100), die konfiguriert ist, um zwischen dem ersten Ausgangsanschluss und dem zweiten Ausgangsanschluss verbunden zu werden;
einen Spannungsregler (200), der konfiguriert ist, um zwischen dem ersten Ausgangsanschluss und dem zweiten Ausgangsanschluss verbunden zu werden, der die Ausgangsspannung gemäß einer Referenzspannung (U1) auf einen zuvor bestimmten Betrag einstellt;
einen Spannungsdetektor (300, 300a), der konfiguriert ist, um mit dem ersten Ausgangsanschluss und dem Spannungsregler (200) verbunden zu werden,
einen ersten Transistor (Q3), der konfiguriert ist, um zwischen dem zweiten Ausgangsanschluss und dem zweiten Eingangsanschluss verbunden zu werden, wobei eine Steuerklemme des ersten Transistors (Q3) mit dem ersten Ausgangsanschluss und dem Spannungsdetektor (300, 300a) gekoppelt ist;
wenn die Ausgangsspannung höher als der zuvor bestimmte Betrag ist, der Spannungsdetektor (300) konfiguriert ist, um den ersten Transistor (Q3) auszuschalten; und
einen zweiten Transistor (Q2), der konfiguriert ist, um zwischen der Steuerklemme des ersten Transistors (Q3) und dem zweiten Eingangsanschluss verbunden zu werden, wobei eine Steuerklemme des zweiten Transistors (Q2) ein Dimmsignal empfängt, wenn eine Spannung des Dimmsignals höher als ein Schwellenwert ist, wobei der zweite Transistor (Q2) konfiguriert ist, um den ersten Transistor (Q3) auszuschalten.

2. Spannungsregelschaltung nach Anspruch 1, wobei
der Spannungsregler (200) umfasst:
einen ersten Widerstand (R3) und einen zweiten Widerstand (R7), die konfiguriert sind, um zwischen dem ersten Ausgangsanschluss und dem zweiten Ausgangsanschluss in Reihenverbindung zu sein; und
einen Referenzspannungsgenerator, wobei eine Anode des Referenzspannungsgenerators mit dem zweiten Ausgangsanschluss verbunden ist, eine Kathode des Referenzspannungsgenerators mit dem Spannungsdetektor (300) verbunden ist, eine Referenzklemme des Referenzspannungsgenerators mit einem Verbindungsknoten des ersten Widerstands (R3) und des zweiten Widerstands (R7) verbunden ist, die Kathode des Referenzspannungsgenerators die Referenzspannung ausgibt.

3. Spannungsregelschaltung nach Anspruch 2, wobei
der Spannungsregler (200) ferner umfasst:
einen ersten Kondensator (C2) und einen dritten Widerstand (R11), die konfiguriert sind, um zwischen der Kathode und der Referenzklemme des Referenzspannungsgenerators in Reihenverbindung zu sein.

4. Spannungsregelschaltung nach Anspruch 1, wobei
ein vierter Widerstand (R10) und ein fünfter Widerstand (R12) zwischen dem ersten Ausgangsanschluss und dem Steueranschluss des ersten Transistors (Q3) in Reihenverbindung sind,
ein sechster Widerstand (R9) zwischen dem Steueranschluss des ersten Transistors (Q3) und dem zweiten Eingangsanschluss verbunden ist.

5. Spannungsregelschaltung nach Anspruch 1, wobei
der Spannungsdetektor (300) umfasst:
einen siebten Widerstand (R1), einen achten Widerstand (R2) und eine Diode (D6), die konfiguriert sind, um zwischen dem ersten Eingangsanschluss und dem Spannungsregler (200) in Reihenverbindung zu sein; und
einen optischen Koppler (U3), wobei eine Anode einer Eingangs-LED in dem optischen Koppler (U3) mit einem Knoten, der den siebten Widerstand (R1) und den achten Widerstand (R2) verbindet, verbunden ist, eine Kathode der Eingangs-LED in dem optischen Koppler (U3) mit einem Knoten, der den achten Widerstand (R2) und die Diode (D6) verbindet, verbunden ist, ein Kollektor eines Ausgangstransistors in dem optischen Koppler (U3) mit einem Kollektor des zweiten Transistors (Q2) verbunden ist und ein Emitter des Ausgangstransistors in dem optischen Koppler (U3) mit dem zweiten Eingangsanschluss verbunden ist.

6. Spannungsregelschaltung nach Anspruch 1, wobei
der Spannungsdetektor (300a) umfasst:
einen siebten Widerstand (R1), einen achten Widerstand (R2) und eine Diode (D6), die konfiguriert sind, um zwischen dem ersten Eingangsanschluss und dem Spannungsregler (200) in Reihenverbindung zu sein; und
einen dritten Transistor (Q1), wobei ein Emitter des dritten Transistors (Q1) über einen neunten Widerstand (R14) mit dem ersten Eingangsanschluss gekoppelt ist, ein Kollektor des dritten Transistors (Q1) mit einer Basis des zweiten Transistors (Q2) gekoppelt ist, eine Basis des dritten Transistors (Q1) mit dem achten Widerstand (R2) verbunden ist.

7. Treiberausrüstung, umfassend
eine Treiberschaltung und die Spannungsregelschaltung nach einem der Ansprüche 1 bis 6, wobei:
die Eingangsspannung mittels der Treiberschaltung bereitgestellt wird.

8. Steuerverfahren für eine Spannungsregelschaltung, die Spannungsregelschaltung umfassend:
einen ersten Eingangsanschluss (X1-a) und einen zweiten Eingangsanschluss (X1-b), die konfiguriert sind, um eine Eingangsspannung zu empfangen;
einen ersten Ausgangsanschluss (X2-a) und einen zweiten Ausgangsanschluss (X2-b), die konfiguriert sind, um eine Ausgangsspannung auszugeben, wobei der erste Eingangsanschluss mit dem ersten Ausgangsanschluss verbunden ist;
eine erste Ausgangsschaltung (100), die konfiguriert ist, um zwischen dem ersten Ausgangsanschluss und dem zweiten Ausgangsanschluss verbunden zu werden;
einen Spannungsregler (200), der konfiguriert ist, um zwischen dem ersten Ausgangsanschluss und dem zweiten Ausgangsanschluss verbunden zu werden, der die Ausgangsspannung gemäß einer Referenzspannung (U1) auf einen zuvor bestimmten Betrag einstellt;
einen Spannungsdetektor (300, 300a), der konfiguriert ist, um mit dem ersten Ausgangsanschluss und dem Spannungsregler (200) verbunden zu werden;
einen ersten Transistor (Q3), der konfiguriert ist, um zwischen dem zweiten Ausgangsanschluss und dem zweiten Eingangsanschluss verbunden zu werden, wobei eine Steuerklemme des ersten Transistors (Q3) mit dem ersten Ausgangsanschluss und dem Spannungsdetektor (300, 300a) gekoppelt ist; und
einen zweiten Transistor (Q2), der konfiguriert ist, um zwischen der Steuerklemme des ersten Transistors (Q3) und dem zweiten Ausgangsanschluss gekoppelt zu werden, wobei eine Steuerklemme des zweiten Transistors (Q2) ein Dimmsignal empfängt,
das Steuerverfahren umfassend:
wenn die Ausgangsspannung höher als der zuvor bestimmte Betrag ist, Ausschalten des ersten Transistors (Q3) durch den Spannungsdetektor (300); oder
wenn die Spannung des Dimmsignals höher als ein Schwellenwert ist, Ausschalten des ersten Transistors (Q3) durch den zweiten Transistor (Q2).

## Revendications

1. Circuit de régulation de tension, comprenant :
un premier port d'entrée (X1-a) et un second port d'entrée (X1-b), configurés pour recevoir une tension d'entrée ;
un premier port de sortie (X2-a) et un second port de sortie (X2-b), configurés pour délivrer une tension de sortie, le premier port d'entrée se connecte au premier port de sortie ;
un circuit de sortie (100), configuré pour être connecté entre le premier port de sortie et le second port de sortie ;
un régulateur de tension (200), configuré pour être connecté entre le premier port de sortie et le second port de sortie, réglant la tension de sortie à une valeur prédéfinie selon une tension de référence (U1) ;
un détecteur de tension (300, 300a), configuré pour être connecté au premier port de sortie et au régulateur de tension (200),
un premier transistor (Q3), configuré pour être connecté entre le second port de sortie et le second port d'entrée, une borne de commande du premier transistor (Q3) étant couplée au premier port de sortie et au détecteur de tension (300, 300a) ;
lorsque la tension de sortie est supérieure à la valeur prédéfinie, le détecteur de tension (300) étant configuré pour désactiver le premier transistor (Q3) ; et
un deuxième transistor (Q2), configuré pour être couplé entre la borne de commande du premier transistor (Q3) et le second port d'entrée, une borne de commande du deuxième transistor (Q2) recevant un signal de gradation, lorsque la tension du signal de gradation est supérieure à un seuil, le deuxième transistor (Q2) étant configuré pour désactiver le premier transistor (Q3).

2. Circuit de régulation de tension selon la revendication 1, dans lequel,
le régulateur de tension (200) comprend :
une première résistance (R3) et une deuxième résistance (R7), configurées pour être connectées en série entre le premier port de sortie et le second port de sortie ; et
un générateur de tension de référence, une anode du générateur de tension de référence est connectée au second port de sortie, une cathode du générateur de tension de référence est connectée au détecteur de tension (300), une borne de référence du générateur de tension de référence est connectée à un nœud de connexion de la première résistance (R3) et de la deuxième résistance (R7), la cathode du générateur de tension de référence sort la tension de référence.

3. Circuit de régulation de tension selon la revendication 2, dans lequel,
le régulateur de tension (200) comprend en outre :
un premier condensateur (C2) et une troisième résistance (R11), configurés pour être connectés en série entre la cathode et la borne de référence du générateur de tension de référence.

4. Circuit de régulation de tension selon la revendication 1, dans lequel,
une quatrième résistance (R10) et une cinquième résistance (R12) sont connectées en série entre le premier port de sortie et le port de commande du premier transistor (Q3),
une sixième résistance (R9) est connectée entre le port de commande du premier transistor (Q3) et le second port d'entrée.

5. Circuit de régulation de tension selon la revendication 1, dans lequel,
le détecteur de tension (300) comprend :
une septième résistance (R1), une huitième résistance (R2) et une diode (D6), configurées pour être connectées en série entre le premier port d'entrée et le régulateur de tension (200) ; et
un coupleur optique (U3), l'anode d'une DEL d'entrée dans le coupleur optique (U3) est connectée à un nœud connectant la septième résistance (R1) et la huitième résistance (R2), une cathode de la DEL d'entrée dans le coupleur optique (U3) est connectée à un nœud connectant la huitième résistance (R2) et la diode (D6), un collecteur d'un transistor de sortie dans le coupleur optique (U3) est connecté à un collecteur du deuxième transistor (Q2), et un émetteur du transistor de sortie dans le coupleur optique (U3) est connecté au second port d'entrée.

6. Circuit de régulation de tension selon la revendication 1, dans lequel,
le détecteur de tension (300a) comprend :
une septième résistance (R1), une huitième résistance (R2) et une diode (D6), configurées pour être connectées en série entre le premier port d'entrée et le régulateur de tension (200) ; et
un troisième transistor (Q1), un émetteur du troisième transistor (Q1) est couplé au premier port d'entrée par le biais d'une neuvième résistance (R14), un collecteur du troisième transistor (Q1) est couplé à une base du deuxième transistor (Q2), une base du troisième transistor (Q1) est connectée à la huitième résistance (R2).

7. Équipement d'attaque, comprenant
un circuit d'attaque, et le circuit de régulation de tension selon l'une des revendications 1 à 6, dans lequel :
la tension d'entrée est fournie par le circuit d'attaque.

8. Procédé de commande d'un circuit de régulation de tension, le circuit de régulation de tension comprenant :
un premier port d'entrée (X1-a) et un second port d'entrée (X1-b), configurés pour recevoir une tension d'entrée ;
un premier port de sortie (X2-a) et un second port de sortie (X2-b), configurés pour délivrer une tension de sortie, le premier port d'entrée étant connecté au premier port de sortie ;
un circuit de sortie (100), configuré pour être connecté entre le premier port de sortie et le second port de sortie ;
un régulateur de tension (200), configuré pour être connecté entre le premier port de sortie et le second port de sortie, réglant la tension de sortie à une valeur prédéfinie selon une tension de référence (U1) ;
un détecteur de tension (300, 300a), configuré pour être connecté au premier port de sortie et au régulateur de tension (200) ;
un premier transistor (Q3), configuré pour être connecté entre le second port de sortie et le second port d'entrée, une borne de commande du premier transistor (Q3) étant couplée au premier port de sortie et au détecteur de tension (300, 300a) ; et
un deuxième transistor (Q2), configuré pour être couplé entre la borne de commande du premier transistor (Q3) et le second port de sortie, une borne de commande du deuxième transistor (Q2) recevant un signal de gradation,
le procédé de commande comprenant :
lorsque la tension de sortie est supérieure à la valeur prédéfinie, le détecteur de tension (300) désactive le premier transistor (Q3) ; ou
lorsque la tension du signal de gradation est supérieure à un seuil, le deuxième transistor (Q2) désactive le premier transistor (Q3).
